# FASCICULE DE BREVET EUROPEEN

(11) **EP 3 033 267 B1**
(45) Date de publication et mention de la délivrance du brevet: **22.03.2017**
(21) Numéro de dépôt: 14750231.4
(22) Date de dépôt: 12.08.2014
(51) Int. Cl.: B62J 1/00

(54) **ASSISE ERGONOMIQUE POUR CYCLE**
ERGONOMISCHER FAHRRADSATTEL
ERGONOMIC SEAT FOR A CYCLE

(30) Priorité: 13.08.2013 BE 201300542
(43) Date de publication de la demande: 22.06.2016
(73) Titulaire: Pasquier, Philippe, 1050 Bruxelles (BE)
(72) Inventeur: Pasquier, Philippe, 1050 Bruxelles (BE)
(74) Mandataire: Le Quéré, Hervé Yves
(86) Numéro de dépôt international: PCT/EP2014/067214
(87) Numéro de publication internationale: WO 2015/022307

(56) Documents cités:
- EP-A1- 0 467 541
- EP-A2- 0 734 943
- DE-U1- 20 311 739

## Description

### Domaine de l'invention

L'invention se rapporte à un dispositif d'assise ergonomique, adapté, entre autres, à la posture et au mouvement d'une personne sur un cycle, et notamment une bicyclette. Cette assise est particulièrement adaptée aux personnes ayant une pratique récurrente d'un cycle, notamment les cyclistes, et plus particulièrement les sportifs.

### État de la technique

La pratique d'un cycle, notamment de manière intensive, peut entraîner de nombreux problèmes pathologiques du fait de la fixité des selles existantes et du contact continu entre la selle et les zones anatomiques de l'utilisateur, ou des zones anatomiques de l'utilisateur en contact fréquent et entrant en frottement avec la selle lors de son utilisation. Les diverses pathologies ont pour origine une compression du système circulatoire et du système nerveux, des pressions au niveau des muscles postérieurs de la cuisse et des muscles fessiers, ou un frottement du tissu conjonctif. Ces phénomènes entraînent par exemple l'apparition de douleurs périnéales chroniques, de lésions cutanées et tissulaires, ou des indurations.

Le document WO2009/040861 décrit une selle de bicyclette comprenant deux surfaces destinées à supporter les parties dorsales supérieures de chacune des cuisses d'un individu au niveau de la tubérosité ischiatique. Les deux surfaces sont articulées et mobiles lors du pédalage afin d'éviter le déhanchement du corps inhérent au mouvement de pédalage. En revanche, lors de l'utilisation de ces selles, les parties anatomiques de l'utilisateur en contact de la selle sont soumises à des forces de compression élevées. Ainsi, bien que certains problèmes liés à la suppression au moins partielle du déhanchement soient résolus par ce système, des problèmes liés au contact entre la selle et l'utilisateur au niveau de zones sensibles à la compression et/ou aux frottements restent présents. De surcroît, une selle telle que décrite dans ce document ne confère pas à son utilisateur un support satisfaisant afin de le stabiliser sur la bicyclette, notamment en posture statique. De plus, ce système n'est que peu adaptable à l'utilisateur, les surfaces de support étant encadrées par les moyens permettant l'articulation des surfaces de support selon un mouvement pendulaire. Le document EP0734943 qui représente l'état de la technique le plus proche, décrit également une assise comprenant deux surfaces d'assise.

Mais ces surfaces n'apportent pas un soutien suffisant à l'utilisateur du cycle.

Il existe donc un besoin pour une assise ergonomique adaptable à l'utilisateur d'un cycle, l'assise ergonomique permettant une meilleure répartition des forces de compression au niveau des zones anatomiques en contact avec les surfaces de support de l'assise. Il existe également un besoin pour une assise ergonomique dont la stabilité statique de l'utilisateur est améliorée.

### Résumé de l'invention

Un des buts de la présente invention est donc de fournir une assise pour cycle, par exemple pour bicyclette, réduisant les effets des forces de compression subies par l'utilisateur de la selle, ces mêmes surfaces assurant la stabilité de l'utilisateur, notamment en position statique. Un autre but de l'invention est de permettre à une pluralité d'utilisateurs de pouvoir utiliser (chacun à leur tour) au moins une partie commune de l'assise, et une partie adaptée à sa propre morphologie. Un autre but est d'améliorer le confort d'assise d'un utilisateur.
Une assise pour cycle selon l'invention comprend deux éléments d'assise distincts et un ensemble de structure apte à relier chacun des deux éléments d'assise audit cycle. Chacun des deux éléments d'assise comporte une surface d'assise en forme de languette et présentant une surface proximale d'assise substantiellement horizontale et une surface distale d'assise comportant une portion incurvée vers le haut. Une largeur de chacune des surfaces d'assise est comprise entre 2 cm et 10 cm, et une extrémité de chaque surface distale d'assise s'élève à au moins 4 cm, préférentiellement au moins 6 cm, encore plus préférentiellement au moins 10 cm, au-dessus de la surface proximale d'assise correspondante. La surface distale d'assise (4a2, 4b2) comporte également une portion incurvée vers l'avant.

Grâce à cette assise, le contact entre les surfaces d'assise et l'utilisateur sont plus importantes, et le contact est également réparti au niveau de zones anatomiques plus résistantes aux phénomènes de compression, réduisant ainsi les pathologies liées à la pratique du cycle avec des selles de l'état de l'art. De plus, grâce à leur forme, chacune des surfaces d'assise peut soutenir un utilisateur de la bicyclette au niveau de zones anatomiques particulières, permettant un soutien par chacune des surfaces proximales d'assise de l'utilisateur au niveau de chacune de ses tubérosités ischiatiques, et par chacune des surfaces distales d'assise de l'utilisateur au niveau de la face latérale externe de chacune des cuisses, au moins jusqu'au niveau de chaque axe de rotation coxo-fémoral. La répartition générale des forces de support est réalisée sur une plus large région anatomique. De surcroît, de par la forme de languette de la surface d'assise, le dispositif soutient également l'utilisateur au niveau des zones morphologiques présentes entre chaque surface proximale d'assise et chaque surface distale d'assise présente pour une même surface d'assise, et ce de façon continue en épousant mieux la forme du corps de l'utilisateur, sans pour autant comprimer l'ensemble des muscles du bassin. De plus, avec une telle assise, il est possible de séparer facilement chacune des surfaces d'assise de l'élément de structure, afin qu'une pluralité d'utilisateurs d'un même cycle puissent l'utiliser sans avoir à changer l'élément de structure. De plus, avec une assise selon l'invention, il est plus facile d'installer et d'utiliser des assises dont les deux surfaces d'assise ne sont pas symétriques l'une par rapport à l'autre, permettant à des utilisateurs porteurs d'une dissymétrie des membres inférieurs suite à une malformation de la hanche ou suite à un accident d'avoir une posture plus confortable qu'avec les selles de l'état de l'art.

Selon un mode de réalisation préférée de l'invention, chacun des éléments d'assise est monté pivotant sur l'ensemble de structure selon respectivement un premier et un second axe de pivot.

Selon ce mode de réalisation, les éléments d'assise sont mobiles, afin de permettre aux surfaces d'assise de se positionner convenablement par rapport à l'utilisateur lorsque ce dernier s'assied. Les forces de compression présentes entre l'utilisateur et les surfaces d'assises seront encore mieux réparties. Les forces de compression seront plus importantes au niveau de chacune des surfaces distales d'assise, et les forces de compression seront réduites au niveau de chacune des surfaces proximales d'assise. Ainsi, les forces de compression sont réduites au niveau des tubérosités ischiatiques, réduisant encore plus les diverses pathologies liées au support du corps de l'utilisateur grâce à une augmentation des forces de soutien au niveau de chacune des surfaces distales d'assise. Cette caractéristique permet de transférer une partie de la réaction au poids du corps de l'ischion vers la partie latérale du bassin, au niveau de la hanche et du haut de la cuisse, pendant l'utilisation de l'assise, c'est-à-dire pendant que le bassin d'un utilisateur repose sur le dispositif. En supportant les faces latérales extérieures des cuisses jusqu'au niveau de l'axe coxo-fémoral, zone anatomique moins sensible aux phénomènes de compression, grâce aux surfaces de support distales, les forces de support au niveau des surfaces proximales d'assise sont réduites, réduisant les pathologies au niveau des zones anatomiques en contact avec ces surfaces proximales d'assise. Il en ressort une assise encore plus ergonomique, permettant de réduire encore plus les problèmes liés à une pratique régulière d'un cycle. L'assise selon ce mode de réalisation permet une meilleure répartition des forces de compression au niveau du bassin de l'utilisateur que ce soit pendant le pédalage ou en position immobile, et améliore la stabilité de l'utilisateur.

Selon un mode de réalisation encore plus préféré de l'invention, l'assise est caractérisée en ce que les surfaces d'assise (4a, 4b) sont espacées d'au moins 6 cm au niveau d'une extrémité proximale de chacune des surfaces proximales d'assise.

Selon ce mode de réalisation, aucune des deux surfaces d'assise ne présente une partie supportant la zone périnéale de l'utilisateur, réduisant, voire supprimant, ainsi les forces de compression au niveau de la zone périnéale dues à un contact avec une surface de support. Une assise selon ce mode de réalisation préféré permet également de conserver une rotation des jambes lors de l'effort de pédalage parallèle au plan vertical longitudinal du cycle car l'utilisateur peut conserver ses jambes parallèles au cadre du cycle sans que sa partie périnéale ne frotte contre une quelconque surface d'assise.

L'invention est définie par les revendications indépendantes. Les revendications dépendantes définissent des modes de réalisation préférés de l'invention.

### Brève description des figures

Ces aspects ainsi que d'autres aspects de l'invention seront clarifiés dans la description détaillée de modes de réalisation particuliers de l'invention, référence étant faite aux figures, dans lesquelles :
- la Fig.1: montre schématiquement une assise selon un premier mode de réalisation de l'invention. La fig. 1.a) est une vue de face de l'assise selon ce premier mode de réalisation. La fig. 1.b) est une vue latérale selon l'axe AA' de l'assise selon ce premier mode de réalisation.
- la Fig. 2: montre schématiquement une assise selon un second mode de réalisation de l'invention. La fig. 2.a) est une vue de face de l'assise selon ce second mode de réalisation. La fig. 2.b) est une vue latérale selon l'axe AA' de ce second mode de réalisation. La fig. 2.c) est une vue de haut de ce second mode de réalisation.
- La Fig. 3: montre une vue de principe d'une assise selon l'un des modes de réalisation de l'invention.
- La Fig. 4: montre schématiquement une assise vue de face selon un troisième mode de réalisation de l'invention.

Les figures ne sont pas à l'échelle. Généralement, des éléments semblables sont dénotés par des références semblables dans les figures. La présence de numéros de référence aux dessins ne peut être considérée comme limitative, y compris lorsque ces numéros sont indiqués dans les revendications.

### Description détaillée de modes de réalisation particuliers

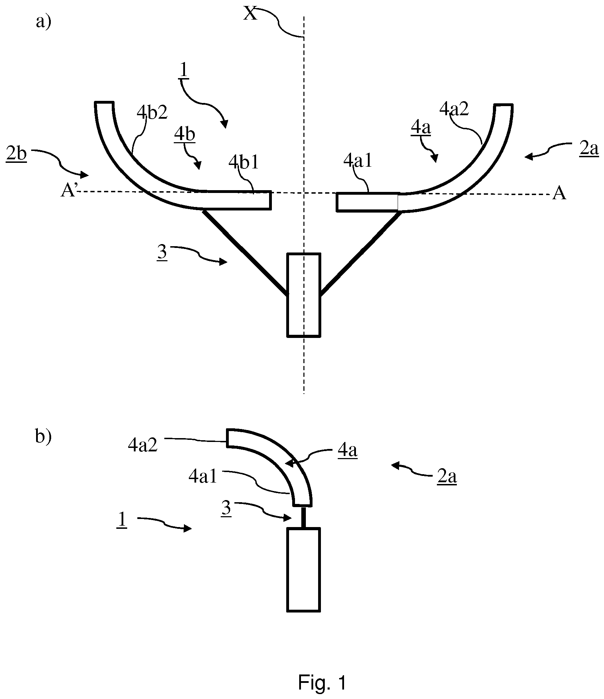

On se référera tout d'abord à la fig. 1.a). L'assise (1) pour cycle comprend deux éléments d'assise (2a, 2b) distincts et un ensemble de structure (3) apte à relier chacun des deux éléments d'assise (2a, 2b) audit cycle. Elle est caractérisée en ce que chacun des deux éléments d'assise (2a, 2b) comporte une surface d'assise (4a, 4b) en forme de languette et présentant une surface proximale d'assise (4a1, 4b1) substantiellement horizontale et une surface distale d'assise (4a2, 4b2) comportant une portion incurvée vers le haut,
et en ce qu'une largeur de chacune des surfaces d'assise (4a, 4b) est comprise entre 2 cm et 10 cm,
en ce que d'une extrémité de chaque surface distale d'assise (4a2, 4b2) s'élève à au moins 4 cm, préférentiellement au moins 6 cm, encore plus préférentiellement au moins 10 cm, au-dessus de la surface proximale d'assise correspondante (4a1, 4b1),
et en ce chaque surface distale d'assise (4a2, 4b2) comporte une portion incurvée vers l'avant.

Dans le cadre de cette invention, un cycle est défini comme un véhicule ayant au moins une roue, et préférentiellement au moins deux roues, et pouvant être propulsé par l'énergie musculaire des personnes se trouvant sur ce véhicule, notamment à l'aide de pédales. Un cycle peut être par exemple une bicyclette, un tricycle ou une motocyclette. L'élément de structure (3) peut être n'importe quel élément permettant de relier et de soutenir les éléments d'assises (2a, 2b) au cycle (10), tel que par exemple tel qu'illustré à la fig. 1.a) une structure solide en forme de cornes. L'ensemble de structure (3) peut être en acier, en fibre de carbone, en aluminium, en titane, ou un alliage de ces composés, comprenant au moins un moyen de fixation pour chacun des éléments d'assise. L'ensemble de structure (3) peut comprendre 2 éléments distincts, chaque élément de structure (3) supportant un élément d'assise (2a, 2b), comme illustré sur la fig. 1.a). Cependant, l'ensemble de structure (3) peut être constitué d'un seul élément supportant les deux éléments d'assise (2a, 2b). Les éléments d'assise (2a, 2b) peuvent être reliés à l'ensemble de structure (3) par un moyen de fixation tel qu'une vis, une encoche, un moyeu, ou tout moyen équivalent.

Les deux éléments d'assise (2a, 2b) sont de préférence dans un matériau rigide, tel que par exemple des éléments en carbone, en résine, en bois, en métal, en époxy, en polyamide ou en polypropylène, renforcé ou non avec des fibres, et éventuellement recouvert d'une matière souple afin d'améliorer le confort d'utilisation. De façon préférentielle, un ou plusieurs coussins, de préférence gonflables, peuvent être positionnés sur chacune des surfaces d'assise (4a, 4b) de façon à améliorer le contact et/ou le confort entre l'utilisateur et cette partie de l'assise.

Chaque élément d'assise (2a, 2b) comprend une surface d'assise (4a, 4b). Une surface d'assise (4a, 4b) est la partie de l'élément d'assise destinée à être en contact avec un utilisateur lorsque ce dernier est assis sur le cycle. Chaque surface d'assise (2a, 2b) comprend une surface proximale d'assise (4a1, 4b1) située à proximité du cadre du cycle. Chaque surface d'assise comprend également une surface distale d'assise (4a2, 4b2) plus éloignée du cadre du cycle. Une surface proximale d'assise (4a1, 4b1) est une surface substantiellement plane, et substantiellement horizontale. De préférence, les surfaces proximales d'assise (4a1, 4b1) s'éloignent du cadre du cycle selon une direction générale perpendiculaire à un plan de symétrie longitudinal (X) de ce cadre. Chaque surface d'assise (4a, 4b) est en forme de languette, c'est-à-dire une pièce présentant une longueur plus importante que sa largeur. A cette fin, la largeur de chacune des surfaces d'assise est comprise entre 2 et 10 cm, plus préférentiellement entre 3 et 8 cm, et encore plus préférentiellement entre 4 et 6 cm. Cette largeur n'est pas forcément identique sur la totalité de la longueur de chaque surface d'assise. Il est par exemple possible d'avoir une surface d'assise relativement large au niveau de la surface proximale d'assise (4a1, 4b1), et d'avoir ensuite une largeur moindre sur le reste de la surface d'assise ou inversement. Chaque surface proximale d'assise (4a1, 4b1) est substantiellement horizontale, c'est-à-dire que chacune de ces surfaces proximales est substantiellement orientée vers le haut de façon à pouvoir servir de support lorsque l'utilisateur s'assied dans l'assise (1), ce support se faisant au niveau des tubérosités ischiatiques de l'utilisateur. Chaque surface distale d'assise (4a2, 4b2) comporte une portion orientée vers le haut de façon à être apte à servir de support lorsque l'utilisateur s'assied dans l'assise (1), ce support se faisant de façon continue de chacune des surfaces proximales d'assise (4a1, 4b1) jusqu'à une extrémité de chacune des surfaces distales d'assise (4a2, 4b2) qui supportent l'utilisateur au niveau de chacune des faces latérales externes de la cuisse, jusqu'au moins au niveau de chacun des axes coxo-fémoraux. A cette fin, une extrémité de chaque surface distale d'assise (4a2, 4b2) s'élève à au moins 4 cm au-dessus de la surface proximale d'assise (4a1, 4b1) correspondante, de façon préférentielle au moins 6 cm, de façon encore plus préférentielle au moins 10 cm, et de façon encore plus préférentielle au moins 15 cm. Ainsi, l'assise (1) selon l'invention comprend deux surfaces d'assise (4a, 4b) formant un support au profil ergonomique. Il s'entend que l'incurvation présente pour chaque surface d'assise (4a, 4b) et la longueur de chaque surface d'assise (4a, 4b) peuvent varier en fonction d'une morphologie propre à chaque utilisateur. Dans le cadre de cette invention, la face latérale de la cuisse peut comprendre la partie supérieure de la cuisse et la face latérale de la hanche en regard de l'axe de rotation coxo-fémoral.

De manière préférentielle, une longueur de chaque surface proximale d'assise (4a1, 4b1) peut être comprise entre 6 et 10 cm. Alternativement ou complémentairement, une longueur de chaque surface distale d'assise peut être comprise entre 12 et 18 cm.

La portion incurvée vers l'avant de chaque surface distale d'assise est illustrée à la fig. 1b). Ainsi, chacune des surfaces distales d'assise (4a2, 4b2) possède une première portion incurvée vers le haut et une seconde portion incurvée vers l'avant du cycle. Ces portions peuvent être distinctes. Ces portions peuvent également être au moins partiellement confondues. A titre d'exemple, une seule portion de chaque surface distale d'assise (4a2, 4b2) peut être à la fois orientée vers le haut et vers l'avant. Alternativement, chaque surface distale d'assise (4a2, 4b2) peut comprendre une portion uniquement incurvée vers le haut, une portion incurvée vers l'avant et vers le haut, et une portion uniquement incurvée vers l'avant. L'assise selon l'invention offre une meilleure répartition des différentes forces de compression, et améliore le confort d'assise de l'utilisateur grâce à la partie incurvée vers l'avant qui épouse la morphologie du corps humain. Avec une telle assise (1), la courbure de l'assise (1) est ainsi mieux adaptée à la morphologie d'un utilisateur. Ainsi, les surfaces d'assise (4a, 4b) forment un support au profil ergonomique.

Une assise (1) avec ces caractéristiques permet de supporter un utilisateur au niveau des tubérosités ischiatiques, des faces latérales extérieures des cuisses du cycliste au niveau d'un axe traversant chacune des articulations coxo-fémorales du cycliste, et également au niveau de chaque partie du corps du cycliste située entre la tubérosité ischiatique et la face latérale extérieure de la cuisse, c'est-à-dire au niveau du pli de la zone dorso-latérale superficielle du corps, qui joint la cuisse à la fesse là où s'arrête la courbure de la fesse et là où commence la cuisse. Autrement dit, ces zones regroupent chacune des tubérosités ischiatiques (élargissement de la partie antérieure de l'ischion marquant le point de fusion entre l'ischion et le pubis), chacun des plis de la zone dorso-latérale superficielle du corps qui joignent la cuisse à la fesse et les muscles, tendons et aponévroses musculaires présents sur la face latérale extérieure de chacune des cuisses en regard de l'aile iliaque et de l'axe passant par les deux articulations coxo-fémorales, et soutenant notamment les grands trochanters fémoraux.

L'articulation coxo-fémoral est une zone de la hanche où la tête du fémur est en contact avec l'acétabulum d'une hanche. Les surfaces distales d'assise (4a2, 4b2) de chacun des éléments d'assise (2a et 2b) sont donc en contact avec l'utilisateur, sur la partie latérale de la cuisse, de façon à supporter les muscles de la cuisse jusqu'à au moins une partie présente dans l'axe passant par les deux articulations coxo-fémorales d'un utilisateur, permettant ainsi de soutenir ces muscles de façon à répartir les forces de compression et de frottement de façon plus équilibrée qu'avec les selles de l'art antérieur. Le soutien des muscles au moins jusqu'à une partie anatomique sur la face latérale de la cuisse dans l'axe passant par les deux articulations coxo-fémorales permet en outre d'augmenter la stabilité de l'utilisateur de l'assise, notamment en position statique.

Les surfaces d'assise (2a, 2b) peuvent présenter une seule surface de support, c'est-à-dire sans interruption des surfaces d'assise (4a, 4b) entre les surfaces proximales d'assise (4a1, 4b1) et les surfaces distales d'assise (4a2, 4b2), chacune des surfaces d'assise (4a, 4b) étant alors une surface continue d'une extrémité proximale (4a1, 4b1) de la surface d'assise (2a, 2b) à une extrémité distale (4a2, 4b2) de la surface d'assise (2a, 2b). Alternativement, chaque surface d'assise (4a, 4b) peut cependant être formée de plusieurs surfaces se superposant ou s'emboitant. Ainsi, à titre d'exemple, chaque surface proximale d'assise (4a1, 4b1) peut être reliée à l'ensemble de structure, tandis que chaque surface distale d'assise (4a2, 4b2) n'est pas reliée à l'ensemble de structure lorsque l'assise n'est pas utilisée. Lorsque l'assise est utilisée, chaque surface distale d'assise (4a2, 4b2) peut être reliée à chaque surface proximale d'assise correspondante par un moyen de liaison, par exemple un organe de liaison mâle-femelle, ou en superposant sur au moins une partie de chaque surface proximale d'assise (4a1, 4b1) au moins une partie d'une surface distale d'assise (4a2, 4b2) correspondante. Les surfaces distales d'assise (4a2, 4b2) peuvent selon ce mode de réalisation être placées dans un vêtement, comme un short comprenant des poches de réception pour ces surfaces, et lorsque l'utilisateur du cycle utilise l'assise, les surfaces distales d'assise (4a2, 4b2) se superposent aux surfaces proximales d'assise (4a1, 4b1), formant ainsi des surfaces d'assise (4a, 4b) continues. Selon un mode de réalisation de l'invention, au moins une première partie de chaque élément d'assise (2a, 2b) peut coopérer directement avec l'ensemble de structure (3). De façon préférentielle, la première partie de chaque élément d'assise (2a, 2b) qui coopère directement avec l'élément de structure (3) comprend une surface proximale d'assise (4a1, 4b1). Une seconde partie de chaque élément d'assise (2a, 2b) complétant chaque surface d'assise (4a, 4b) peut être placée dans un vêtement ou sur un vêtement de façon à coopérer avec la première partie de l'élément d'assise (2a, 2b) correspondant lorsque l'utilisateur du cycle adopte une position assise, Cette coopération peut par exemple se faire par une superposition d'au moins une portion de chacune des surfaces proximales d'assise (4a1, 4b1) par au moins une partie des secondes parties d'élément d'assise. De façon avantageuse, une portion de la surface supérieure de chaque première partie des éléments d'assise (2a, 2b) peut comprendre un moyen pour faciliter la coopération et pour réduire les phénomènes de glissement entre la première partie et la seconde partie de chaque élément d'assise (2a, 2b). A titre d'exemple, une portion de la surface supérieure de la première partie de chaque surface d'assise (4a, 4b) peut être striée, de manière préférentielle selon un axe perpendiculaire au plan de symétrie du cycle, et une partie inférieure de la seconde partie de chaque élément d'assise (2a, 2b) qui coopère avec la première partie peut également être striée de façon complémentaire à la portion striée sur la première partie. Ainsi, selon ce mode de réalisation, chaque élément d'assise (2a, 2b) comprend au moins deux éléments distincts qui coopèrent pour former les surfaces d'assise (4a, 4b). Un premier élément peut être fixé à l'ensemble de structure (3), et le second élément peut être introduit dans une poche d'un vêtement, ou cousu ou collé sur un vêtement. Lorsque le cycliste utilise l'assise, les seconds éléments se superposent au moins partiellement aux premiers éléments, formant ainsi les surfaces d'assise (4a, 4b).

De façon préférentielle, l'incurvation vers l'avant et/ou vers le haut est telle que l'extrémité de chaque surface distale d'assise (4a2, 4b2) est une surface plane substantiellement parallèle au plan de symétrie longitudinal (X) du cadre du cycle et dont la largeur est substantiellement verticale. De façon préférentielle, chacune des surfaces distales d'assise (4a2, 4b2) est incurvée vers l'avant et vers le haut de façon à ce que chaque extrémité desdites surfaces distales d'assise (4a2, 4b2) soit en contact avec une zone anatomique de l'utilisateur située sur la face latérale extérieure de la cuisse en regard d'un axe passant par chacun des axes de rotation coxo-fémoraux, située entre 2 et 4 cm au-dessus de la terminaison du grand trochanter. Une telle configuration permet un soutien amélioré des membres inférieurs lors des mouvements de flexion et d'extension des jambes réalisés lors de l'effort de pédalage.

Selon un mode de réalisation préférentiel de l'invention, la portion incurvée vers le haut de chaque surface distale d'assise (4a2, 4b2) représente au moins 50 % d'une longueur de chaque surface distale d'assise (4a2, 4b2), plus préférentiellement au moins 75% d'une longueur de chaque surface distale d'assise (4a2, 4b2) correspondante.

Selon un mode de réalisation préférentiel de l'invention, la portion incurvée vers l'avant de chaque surface distale d'assise (4a2, 4b2) représente au moins 25 % de la longueur de chaque surface distale d'assise (4a2, 4b2) ; plus préférentiellement au moins 50% d'une longueur de chaque surface distale d'assise (4a2, 4b2) correspondante.

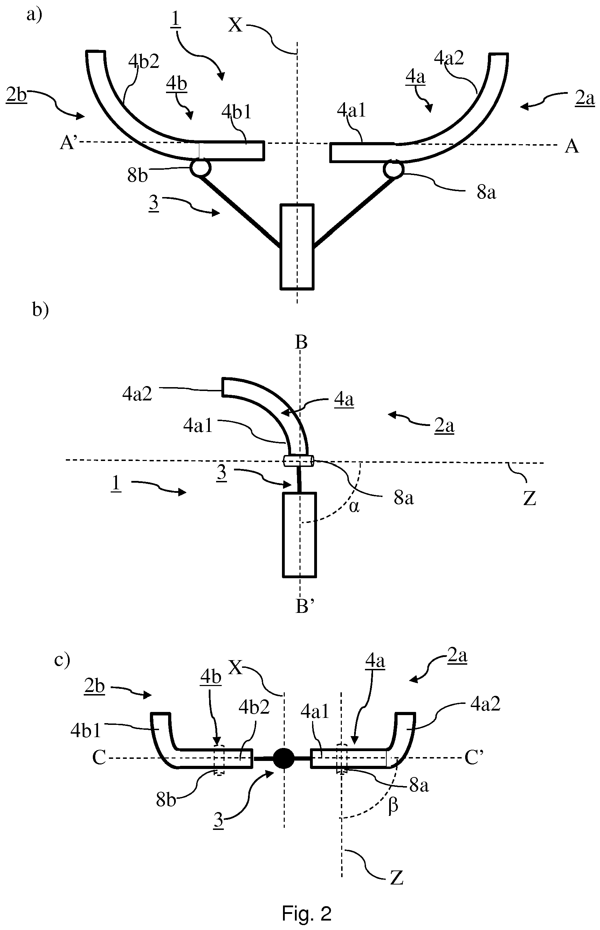

Selon un mode de réalisation de l'invention illustré à la fig. 2, chacun des éléments d'assise (2a, 2b) est monté pivotant sur l'ensemble de structure (3) selon respectivement un premier (8a) et un second (8b) axe de pivot.

Selon ce mode de réalisation, chacun des axes de pivot (8a, 8b) permet de relier l'ensemble de structure (3) à chacun des éléments d'assise (2a, 2b) tout en permettant à ces derniers de pivoter autour dudit axe. Un axe de pivot (8a, 8b) permet à chaque élément d'assise (2a, 2b) d'être apte à se déplacer en rotation autour de cet axe de pivot (8a, 8b). Le mouvement de rotation permet, lorsqu'un cycliste utilise l'assise (1), de mieux répartir les différentes forces de compression en fonction de la posture et des mouvements réalisés par le cycliste, permettant aux surfaces d'assise (4a, 4b) de rester au contact du cycliste quel que soit sa posture ou son mouvement.

De façon préférentielle, illustré à la fig. 2a), deux axes de pivot (8a, 8b) sont situés sur l'ensemble de structure (3) de part et d'autre du plan de symétrie longitudinal (X) du cadre du cycle et symétriquement par rapport à ce dernier.

Selon un mode de réalisation particulier, illustré à la fig. 2b), l'assise (1) est caractérisée en ce que le premier axe de pivot (8a) et le second axe de pivot (8b) forment chacun un premier angle (α) avec une droite (BB') verticale et parallèle à un plan de symétrie longitudinal (X) d'un cadre du cycle et coupant ledit axe de pivot. Ledit angle (α) est compris entre 45° et 135°, plus préférentiellement entre 70° et 110°, encore plus préférentiellement entre 80° et 100°, encore plus préférentiellement entre 85° et 95°. Telle que figurée sur les fig. 2.b) et 2.c), une droite passant par l'axe de pivot (8a) est symbolisée par la droite Z. Dans le mode de réalisation particulier illustré à la fig. 2b), l'angle (α) est égal à 90°.

Selon ce mode de réalisation, l'axe de pivot (8a, 8b) est relativement parallèle au sol, permettant aux éléments d'assise (2a, 2b) de pivoter selon un axe relativement horizontal par rapport au sol lorsque le cycle est sur un sol plat, permettant au cycliste une meilleure assise.

Selon un mode de réalisation alternatif ou complémentaire, illustré à la fig. 2c), le premier (8a) et le second (8b) axe de pivot forment chacun un deuxième angle (β) avec une droite horizontale (CC') perpendiculaire au plan de symétrie longitudinal (X) du cadre du cycle. Le deuxième angle (β) est compris entre 75° et 105°, préférentiellement entre 80° et 100°, plus préférentiellement entre 85° et 95°, et encore plus préférentiellement le second angle (β) est un angle égal à 90°. Selon le mode de réalisation particulier illustré à la fig. 2c), le second angle (β) est égal à 90°.

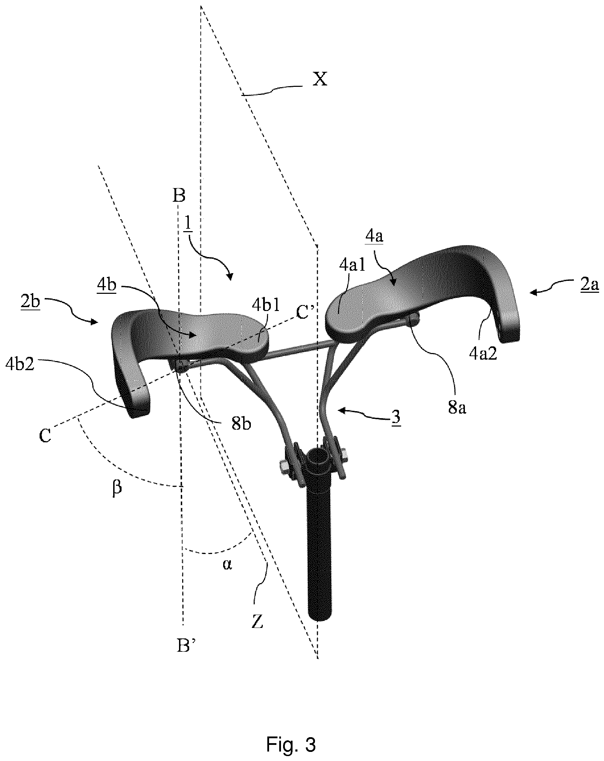

Selon ce mode de réalisation, chacun des axes de pivot (8a, 8b) est orienté substantiellement parallèlement par rapport au cadre du cycle, permettant aux éléments d'assise (2a, 2b) de facilement pivoter vers l'intérieur du cycle lorsqu'un utilisateur utilise l'assise, augmentant ainsi la stabilité de l'utilisateur, et augmentant les forces de compression au niveau des surfaces distales d'assise (4a2, 4b2) et de diminuer les forces de compression au niveau des surfaces proximales d'assise (4a1, 4b1), permettant ainsi une meilleure répartition de ces forces, et réduisant encore plus l'apparition de pathologies liées à la pratique du cycle. Le mode de réalisation particulier de l'invention, illustré à la fig. 3, présente des éléments d'assises (2a, 2b) montés sur des axes de pivot (8a, 8b) substantiellement horizontaux et parallèles au cadre du cycle, les surfaces distales d'assise (4a2, 4b2) présentant une incurvation vers l'avant et vers le haut. En d'autres termes, le premier angle (α) et le second angle (β) sont égaux à 90° à la fois pour le premier (8a) et le second (8b) axe de pivot.

Selon un mode de réalisation préférentiel, l'assise (1) est caractérisée en ce que chacun des axes de pivot (8a, 8b) forme un premier angle (α) compris entre 80° et 100°, et un second angle (β) compris entre 80° et 100°. De manière encore plus préférentielle, le premier (8a) et le second (8b) axe de pivot forment chacun un premier angle (α) égal à 90°, et un second angle (β) égal à 90°.

De manière préférentielle, l'axe de pivot (8a, 8b) est situé sous un plan horizontal tangentiel (AA') à une partie la plus basse de chacune desdites surfaces d'assise (4a, 4b), comme illustré à la fig. 2a).

Selon ce mode de réalisation, le premier (8a) et le second (8b) axe de pivot sont situés sous chacune des surfaces d'assise (respectivement 4a, 4b), permettant d'avoir un ensemble de structure (3) de taille réduite ne gênant pas la rotation des éléments d'assise (2a, 2b).

Selon un mode de réalisation particulier, il est possible de limiter le mouvement de rotation par la présence, par exemple, d'au moins une butée. Ainsi, chacun des éléments d'assise (2a et 2b) est monté pivotant respectivement sur le premier (8a) et le second (8b) axe de pivot avec une liberté de rotation inférieure à 30°.

Selon ce mode de réalisation, la liberté accordée à la rotation des éléments d'assise (2a, 2b) est limitée afin d'éviter une rotation trop importante de ces éléments pouvant entrainer une chute de l'utilisateur du cycle.

De façon préférentielle, l'assise (1) selon l'un quelconque des modes de réalisation déjà exposé est dépourvue d'un bec de selle (soit une partie de selle s'étendant vers l'avant et située au niveau d'une zone périnéale). L'assise est agencée de manière à ce qu'une zone périnéale ne soit pas en contact avec l'assise (1). Selon ce mode de réalisation, les éléments d'assise (2a, 2b) sont agencés de façon à ce que les surfaces d'assise (4a, 4b) ne soient pas en contact avec cette zone périnéale.

Ainsi, il est possible d'agencer les éléments d'assise (2a, 2b) sur l'ensemble de structure (3) de façon à ce que les surfaces d'assise (4a, 4b) soient espacées d'au moins 6 cm au niveau d'une extrémité proximale de chacune desdites surfaces proximales d'assise (4a1, 4b1). Cet agencement améliore grandement le confort d'utilisation. Une extrémité proximale d'une surface d'assise (4a, 4b) est un point de la surface proximale d'assise (4a1, 4b1) le plus proche du cadre du cycle.

Selon un mode de réalisation préférentiel de l'invention, l'assise (1) est caractérisée en ce que chacun des éléments d'assise (2a et 2b) est amovible par rapport à l'élément de structure (3). Plus préférentiellement, chacun des éléments d'assise (2a et 2b) est monté de façon amovible sur chacun des axes de pivot (8a, 8b).

Selon ce mode de réalisation, il est possible sur un même cycle et pour même ensemble de structure (3) d'utiliser plusieurs ensembles d'assise (2a, 2b) différents, soit pour utiliser un ensemble d'assise (2a, 2b) dont les surfaces d'assise (4a, 4b) sont adaptées à la morphologie d'utilisateurs différents, soit pour utiliser un ensemble d'assise (2a, 2b) dont les surfaces d'assise (4a, 4b) sont adaptées en fonction de l'utilisation du cycle, permettant d'avoir par exemple une assise (1) destinée à un usage sportif, et une autre destinée à un usage ludique.

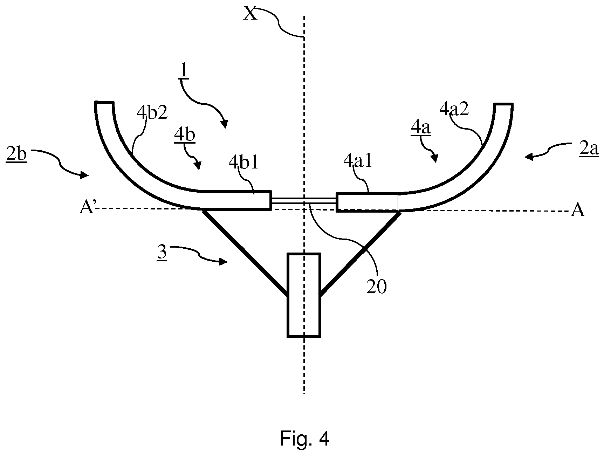

Selon un mode de réalisation particulier, illustré à la fig. 4, l'assise pour cycle peut comprendre en outre une pièce de liaison (20). Lorsque les assises (2a, 2b) sont placées dans un vêtement, cette pièce de liaison (20) peut être présente entre la partie proximale (4a1) de la première assise (2a) et la partie proximale (4b1) de la seconde assise (2b), la pièce de liaison étant également placée dans le vêtement comprenant les éléments d'assise (2a, 2b). La pièce de liaison (20) peut présenter une largeur identique à la largeur de chacune des surfaces proximales d'assise (4a1, 4b1), voire une largeur moindre. La pièce de liaison (20) peut avoir une forme substantiellement rectangulaire. La pièce de liaison (20) peut être reliée par deux de ses côtés opposés aux surfaces proximales assises (4a1, 4b1), soit sur toute la longueur de chacun desdits côtés, soit sur une partie seulement de la longueur desdits côtés. La pièce de liaison (20) est une pièce souple, c'est-à-dire capable de se déformer suivant le mouvement des assises (2a, 2b) et des mouvements du cycliste. Cependant, la pièce de liaison (20) est de préférence dans une matière non extensible (par exemple en polyéthylène, telle qu'une bâche, ou en polychlorure de vinyle, ou dans une matière textile tissée) de façon à ce que la distance entre la partie proximale (4a1) de la première assise (2a) et la partie proximale (4b1) de la seconde assise (2b) ne puisse dépasser une limite définie par la longueur de la pièce de liaison (20). La longueur de la pièce de liaison est définie comme étant une longueur perpendiculaire aux deux côtés de la pièce (20) qui sont reliés aux assises. Ainsi placée entre les parties proximales (4a1, 4b1), cette pièce de liaison (20) n'entrave pas le pivot des surfaces d'assise (2a, 2b), et permet d'améliorer l'assise de l'utilisateur en empêchant tout écartement excessif d'une assise par rapport à l'autre. L'assise est alors encore plus confortable et l'équilibre général est encore plus amélioré. De façon préférentielle, la longueur de la pièce de liaison est comprise entre 15 cm et 4 cm, et plus préférentiellement entre 10 cm et 6 cm. De façon préférentielle, la pièce de liaison est reliée aux assises (2a, 2b) sous un plan tangent aux surfaces proximales d'assise (4a1, 4b1).

L'invention comporte également un procédé de fabrication d'une assise (1) selon l'un quelconque des modes de réalisation exposé précédemment.

Le procédé de fabrication comprend une étape de détermination d'une largueur moyenne de chacune des surfaces d'assise (2a, 2b) et de détermination de l'élévation de chaque surface distale d'assise (4a2, 4b2), ladite étape étant effectuée en fonction d'une anatomie de chaque partie dorsale supérieure de chaque cuisse d'un utilisateur spécifique, d'une anatomie de chaque partie latérale extérieure de chaque cuisse de l'utilisateur spécifique au niveau d'un axe de rotation coxo-fémoral, et de l'anatomie de chaque zone anatomique présente entre chaque partie dorsale supérieure de chaque cuisse de l'utilisateur spécifique et de chaque partie latérale extérieure de chaque cuisse de l'utilisateur spécifique.

Grâce à ce procédé, les assises (1) fabriquées comprendront des surfaces d'assise (2a, 2b) parfaitement adaptées à un utilisateur.

De façon préférentielle, le procédé comprend en outre une étape de détermination d'une incurvation vers l'avant de chaque surface distale d'assise (4a2, 4b2), ladite étape étant effectuée en fonction d'une anatomie de chaque partie latérale extérieure de chaque cuisse de l'utilisateur spécifique jusqu'au niveau d'un axe de rotation coxo-fémoral.

Selon ce mode de réalisation, les assises (1) fabriquées seront encore mieux adaptées à la morphologie de son utilisateur.

La présente invention a été décrite en relation avec des modes de réalisations spécifiques, qui ont une valeur purement illustrative et ne doivent pas être considérés comme limitatifs. D'une manière générale, il apparaîtra évident pour l'homme du métier que la présente invention n'est pas limitée aux exemples illustrés et/ou décrits ci-dessus. La présence de numéros de référence aux dessins ne peut être considérée comme limitative, y compris lorsque ces numéros sont indiqués dans les revendications.
L'usage des verbes « comprendre », « inclure », « comporter », ou toute autre variante, ainsi que leurs conjugaisons, ne peut en aucune façon exclure la présence d'éléments autres que ceux mentionnés.
L'usage de l'article indéfini « un », « une », ou de l'article défini « le », « la » ou « l' », pour introduire un élément n'exclut pas la présence d'une pluralité de ces éléments.

L'invention peut également être décrite comme suit :
L'invention concerne une assise pour cycle comprenant deux surfaces d'assises incurvées vers le haut et vers l'avant permettant de soutenir de façon continue un utilisateur au niveau de zones anatomiques précises situées sous les ischions, sous la partie dorsale supérieure des cuisses jusqu'à une partie ventro-latérale des cuisses au niveau des acétabulums, et passant par chacun des plis de la zone dorso-latérale superficielle du corps qui joignent la cuisse à la fesse. L'invention concerne également un procédé de fabrication d'une assise selon l'invention.

## Revendications

1. Assise (1) pour cycle comprenant deux éléments d'assise (2a, 2b) distincts et un ensemble de structure (3) apte à relier chacun des deux éléments d'assise (2a, 2b) audit cycle, chacun des deux éléments d'assise (2a, 2b) comporte une surface d'assise (4a, 4b) en forme de languette et présentant une surface proximale d'assise (4a1, 4b1) substantiellement horizontale et une surface distale d'assise (4a2, 4b2) comportant une portion incurvée vers le haut, une extrémité de chaque surface distale d'assise (4a2, 4b2) s'élève à au moins 4 cm, préférentiellement au moins 6 cm, au-dessus de la surface proximale d'assise correspondante (4a1, 4b1),
**caractérisée en ce que** une largeur de chacune des surfaces d'assise (4a, 4b) est comprise entre 2 cm et 10 cm,
et **en ce que** chaque surface distale d'assise (4a2, 4b2) comporte une portion incurvée vers l'avant.

2. Assise (1) selon la revendication 1, **caractérisée en ce que** la portion incurvée vers le haut de chaque surface distale d'assise (4a2, 4b2) représente au moins 50% d'une longueur de chaque surface distale d'assise (4a2, 4b2) correspondante.

3. Assise (1) selon l'une quelconque des revendications 1 ou 2, **caractérisée en ce que** la portion incurvée vers l'avant de chaque surface distale d'assise (4a2, 4b2) représente au moins 25% de la longueur de chaque surface distale d'assise (4a2, 4b2) correspondante.

4. Assise (1) selon l'une quelconque des revendications précédentes, **caractérisée en ce que** chacun des éléments d'assise (2a et 2b) est monté pivotant sur l'ensemble de structure (3) selon respectivement un premier (8a) et un second (8b) axe de pivot.

5. Assise (1) selon la revendication 4, **caractérisée en ce que** le premier (8a) et le second (8b) axe de pivot forment chacun un premier angle (α) avec une droite verticale (BB') parallèle à un plan de symétrie longitudinal (X) d'un cadre du cycle et coupant ledit axe de pivot, ledit premier angle (α) étant compris entre 45° et 135°.

6. Assise (1) selon l'une quelconque des revendications 4 ou 5, **caractérisée en ce que** le premier (8a) et le second axe (8b) de pivot forment chacun un deuxième angle (β) avec une droite horizontale (CC') perpendiculaire au plan de symétrie longitudinal (X) du cadre du cycle, ledit deuxième angle (β) étant compris entre 75° et 105°.

7. Assise (1) selon l'une quelconque des revendications 5 ou 6, **caractérisée en ce que** l'angle (α) est compris entre 80° et 100°, et **en ce que** l'angle (β) est compris entre 80° et 100°.

8. Assise (1) selon l'une quelconque des revendications 4 à 7, **caractérisée en ce que** ledit premier (8a) et ledit second (8b) axe de pivot sont situés sous un plan horizontal tangentiel (AA') à une partie la plus basse de chacune desdites surfaces d'assise (4a, 4b).

9. Assise (1) selon l'une quelconque des revendications 4 à 8, **caractérisée en ce que** chacun des éléments d'assise (2a et 2b) est monté pivotant respectivement sur ledit premier (8a) et ledit second (8b) axe de pivot avec une liberté de rotation inférieure à 30°.

10. Assise (1) selon l'une quelconque des revendications précédentes, **caractérisée en ce que** les surfaces d'assises (4a, 4b) sont espacées d'au moins 6 cm au niveau d'une extrémité proximale de chacune desdites surfaces proximales d'assise (4a1, 4b1).

11. Assise (1) selon l'une quelconque des revendications précédentes, **caractérisée en ce que** chacun des éléments d'assise (2a et 2b) est amovible par rapport à l'élément de structure (3).

12. Assise selon l'une quelconque des revendications précédentes, **caractérisée en ce que** chaque élément d'assise (2a, 2b) comprend au moins deux éléments distincts formant la surface s'assise (4a, 4b), les au moins deux éléments distincts se superposant au moins partiellement pour former la surface d'assise (4a, 4b).

13. Assise selon l'une quelconque des revendications 4 à 9, ou l'une quelconque des revendications 10 à 12 lorsqu'elles dépendent de la revendication 4, **caractérisée en ce qu'**une pièce de liaison (20) est présente entre les surfaces proximales d'assise (4a1, 4b1).

14. Procédé de fabrication d'une assise (1) selon l'une quelconque des revendications 1 à 13, **caractérisé en ce qu'**une étape comprenant la détermination d'une largueur moyenne de chacune des surfaces d'assise (2a, 2b) et la détermination d'une incurvation vers le haut de chaque surface distale d'assise (4a2, 4b2) est effectuée en fonction d'une anatomie de chaque partie dorsale supérieure de chaque cuisse d'un utilisateur spécifique, d'une anatomie de chaque partie latérale extérieure de chaque cuisse de l'utilisateur spécifique au niveau d'un axe de rotation coxo-fémoral, et de l'anatomie de chaque zone anatomique présente entre chaque partie dorsale supérieure de chaque cuisse de l'utilisateur spécifique et de chaque partie latérale extérieure de chaque cuisse de l'utilisateur spécifique.

15. Procédé selon la revendication 14, **caractérisé en ce que** une étape de détermination d'une incurvation vers l'avant de chaque surface distale d'assise (4a2, 4b2) est effectuée en fonction d'une anatomie de chaque partie latérale extérieure de chaque cuisse de l'utilisateur spécifique au niveau d'un axe de rotation coxo-fémoral de l'utilisateur spécifique.

## Patentansprüche

1. Sitz (1) für Zweirad, umfassend zwei unterschiedliche Sitzelemente (2a, 2b) und eine Strukturgruppe (3), die geeignet ist, jedes der zwei Sitzelemente (2a, 2b) an das genannte Zweirad anzuschließen, wobei jedes der zwei Sitzelemente (2a, 2b) eine Sitzfläche (4a, 4b) in Zungenform umfasst und eine proximale Sitzfläche (4a1, 4b1) aufweist, die im Wesentlichen horizontal ist, und eine distale Sitzfläche (4a2, 4b2), die einen nach oben gekrümmten Abschnitt umfasst, ein Ende jeder distalen Sitzfläche (4a2, 4b2) erhebt sich um wenigstens 4 cm, bevorzugt um wenigstens 6 cm oberhalb der entsprechenden proximalen Sitzfläche (4a1, 4b1), **dadurch gekennzeichnet, dass** eine Breite jeder der Sitzflächen (4a, 4b) zwischen 2 cm und 10 cm inbegriffen ist und dass jede distale Sitzfläche (4a2, 4b2) einen nach vorn gekrümmten Abschnitt umfasst.

2. Sitzfläche (1) gemäß Anspruch 1, **dadurch gekennzeichnet, dass** der nach oben gekrümmte Abschnitt jeder distalen Sitzfläche (4a2, 4b2) wenigstens 50 % einer Länge jeder entsprechenden distalen Sitzfläche (4a2, 4b2) darstellt.

3. Sitzfläche (1) gemäß irgendeinem der Ansprüche 1 der 2, **dadurch gekennzeichnet, dass** der nach vorn gekrümmte Abschnitt jeder distalen Sitzfläche (4a2, 4b2) wenigstens 25 % der Länge jeder entsprechenden distalen Sitzfläche (4a2, 4b2) darstellt.

4. Sitzfläche (1) gemäß irgendeinem der voranstehenden Ansprüche, **dadurch gekennzeichnet, dass** jedes der Sitzelemente (2a und 2b) schwenkbar auf der Strukturgruppe (3) gemäß jeweils einer ersten (8a) und einer zweiten (8b) Schwenkachse montiert ist.

5. Sitzfläche (1) gemäß Anspruch 4, **dadurch gekennzeichnet, dass** die erste (8a) und die zweite (8b) Schwenkachse jeweils einen ersten Winkel (α) mit einer vertikalen Geraden (BB') bilden, die parallel zu einer länglichen Symmetrieachse (X) eines Rahmens des Zweirades ist und die genannte Schwenkachse schneidet, wobei der genannte erste Winkel (α) zwischen 45° und 135° inbegriffen ist.

6. Sitzfläche (1) gemäß irgendeinem der Ansprüche 4 oder 5, **dadurch gekennzeichnet, dass** die erste (8a) und die zweite (8b) Schwenkachse jeweils einen zweiten Winkel (β) mit einer horizontalen Geraden (CC') bilden, die lotrecht zur länglichen Symmetrieachse (X) des Rahmens des Zweirades ist, wobei der genannte zweite Winkel (β) zwischen 75° und 105° inbegriffen ist.

7. Sitzfläche (1) gemäß irgendeinem der Ansprüche 5 oder 6, **dadurch gekennzeichnet, dass** der Winkel (α) zwischen 80° und 100° inbegriffen ist und dass der Winkel (β) zwischen 80° und 100° inbegriffen ist.

8. Sitzfläche (1) gemäß irgendeinem der Ansprüche 4 bis 7, **dadurch gekennzeichnet, dass** die genannte erste (8a) und die genannte zweite (8b) Schwenkachse sich unter einer horizontalen Ebene (AA') befinden, die einem niedrigeren Teil jeder der genannten Sitzflächen (4a, 4b) anliegt.

9. Sitzfläche (1) gemäß irgendeinem der Ansprüche 4 bis 8, **dadurch gekennzeichnet, dass** jedes der Sitzelemente (2a und 2b) jeweils schwenkbar auf der genannten ersten (8a) und der genannten zweiten (8b) Schwenkachse mit einer Schwenkfreiheit von unter 30° montiert ist.

10. Sitzfläche (1) gemäß irgendeinem der voranstehenden Ansprüche, **dadurch gekennzeichnet, dass** die Sitzflächen (4a, 4b) um wenigstens 6 cm an einem proximalen Ende jeder der genannten proximalen Sitzflächen (4a1, 4b1) beabstandet sind.

11. Sitzfläche (1) gemäß irgendeinem der voranstehenden Ansprüche, **dadurch gekennzeichnet, dass** jedes der Sitzelemente (2a und 2b) im Verhältnis zum Strukturelement (3) abnehmbar ist.

12. Sitzfläche gemäß irgendeinem der voranstehenden Ansprüche, **dadurch gekennzeichnet, dass** jedes Sitzelement (2a, 2b) wenigstens zwei unterschiedliche Elemente umfasst, die die Sitzfläche (4a, 4b) bilden, wobei die wenigstens zwei unterschiedlichen Elemente sich einander wenigstens teilweise überlagern, um die Sitzfläche (4a, 4b) zu bilden.

13. Sitzfläche gemäß irgendeinem der Ansprüche 4 bis 9 oder irgendeinem der Ansprüche 10 bis 12, wenn sie von Anspruch 4 abhängen, **dadurch gekennzeichnet, dass** ein Verbindungsstück (20) zwischen den proximalen Sitzflächen (4a1, 4b1) vorhanden ist.

14. Herstellungsverfahren einer Sitzfläche (1) gemäß irgendeinem der Ansprüche 1 bis 13, **dadurch gekennzeichnet, dass** ein Schritt, der die Bestimmung einer mittleren Breite jeder der Sitzflächen (2a, 2b) und die Bestimmung einer Krümmung jeder distalen Sitzfläche (4a2, 4b2) nach oben umfasst, in Abhängigkeit von einer Anatomie jedes oberen rückwärtigen Teils jedes Oberschenkels eines spezifischen Benutzers, einer Anatomie jedes lateralen äußeren Teils jedes Oberschenkels des spezifischen Benutzers an einer coxo-femoralen Rotationsachse und der Anatomie jedes anatomischen Bereichs, der zwischen jedem rückwärtigen oberen Teil jedes Oberschenkels jedes spezifischen Benutzers und jedem lateralen äußeren Teil jedes Oberschenkels des spezifischen Benutzers ausgeführt ist.

15. Verfahren gemäß Anspruch 14, **dadurch gekennzeichnet, dass** ein Bestimmungsschritt einer Krümmung jeder distalen Sitzfläche (4a2, 4b2) nach vorn in Abhängigkeit einer Anatomie jedes lateralen äußeren Teils jedes Oberschenkels des spezifischen Benutzers an einer coxo-femoralen Rotationsachse des spezifischen Benutzers ausgeführt ist.

## Claims

1. A cycle seat (1) comprising two seat bases (2a, 2b) and a seat frame (3) to attach the seat bases (2a, 2b) to the cycle, wherein each seat base (2a, 2b) has an elongated seating surface (4a, 4b) with a mainly horizontal proximal seating surface (4a1, 4b1) and a distal seating surface (4a2, 4b2) part of which curves upward,
and wherein one end of each distal seating surface (4a2, 4b2) is at least 4 cm and preferably at least 6 cm higher than the corresponding proximal seating surface (4a1, 4b1), **characterized in that** each seating surface (4a, 4b) is 2-10 cm in width,
and **in that** a part of each distal seating surface (4a2, 4b2) curves forward.

2. The cycle seat (1) according to claim 1 wherein the upward curvature of each distal seating surface (4a2, 4b2) represents at least 50% of the length of the corresponding distal seating surface (4a2, 4b2).

3. The cycle seat (1) according to claim 1 wherein the forward curvature of each distal seating surface (4a2, 4b2) represents at least 25% of the length of the corresponding distal seating surface (4a2, 4b2).

4. The cycle seat (1) according to claim 1 wherein each seat base (2a, 2b) is mounted on the seat frame (3) by means of a first (8a) and second (8b) pivot respectively.

5. The cycle seat (1) according to claim 4 wherein the first (8a) and second (8b) pivot each form a first angle (α) comprised between 45° and 135° with respect to a vertical line (BB') parallel to the cycle's longitudinal plane of symmetry (X) and passing through the pivot.

6. The cycle seat (1) according to claim 4 wherein the first (8a) and second (8b) pivot each form a second angle (β) comprised between 75° and 105° with respect to a horizontal line (CC') perpendicular to the cycle's longitudinal plane of symmetry (X).

7. The cycle seat (1) according to claims 4 and 5 wherein the first angle (α) is comprised between 80° and 100° and the second angle (β) is comprised between 80° and 100°.

8. The cycle seat (1) according to claim 4 wherein the first (8a) and second (8b) pivots are located on a horizontal plane (AA') tangent to a lowest part of each seating surface (4a, 4b).

9. The cycle eat (1) according to claim 4 wherein each seat base (2a, 2b) is attached to the first (8a) and second (8b) pivot respectively with a freedom of rotation of less than 30°.

10. The cycle seat (1) according to claim 1 wherein the seating surfaces (4a, 4b) are spaced at least 6 cm apart at a proximal end of each proximal seating surface (4a1, 4b1).

11. The cycle seat (1) according to claim 1 wherein each seat base (2a, 2b) can be detached from the seat frame (3).

12. The cycle seat (1) according to claim 1 wherein each seat base (2a, 2b) comprises at least two separate pieces overlapping at least partially to form the seating surface (4a, 4b).

13. The cycle seat (1) according to claim 4, wherein a linking rod (20) connects the proximal seating surfaces (4a1, 4b1).

14. A method for manufacturing a cycle seat (1) as described in claim 1 wherein the average width of each seating surface (2a, 2b) and the upward curvature of each distal seating surface (4a2, 4b2) are determined for a specific user, based on the anatomy of the upper back part of each thigh, the outer side of each thigh at the hip joint and each region between the upper back part of each thigh and the outer side of each thigh.

15. The method according to claim 14 wherein the forward curvature of each distal seating surface (4a2, 4b2) is determined for a specific user, based on the anatomy of the outer side of each thigh at the hip joint.
